# EUROPEAN PATENT APPLICATION

(11) **EP 4 830 806 A2**
(43) Date of publication of application: **28.10.2026**
(21) Application number: 26166906.3
(22) Date of filing: 23.03.2026
(51) Int. Cl.: A63F 13/98, A63F 13/92, A63F 13/235, H01R 33/92, H02J 7/70

(54) **GAMEPAD CHARGING DOCK**

(30) Priority: 03.04.2025 CN 202520630250 U
(71) Applicant: Shenzhen DeOne Innovation Technology Co., Ltd, Shenzhen, Guangdong 518129 (CN)
(72) Inventor: YU, Lei, Shenzhen, Guangdong, 518129 (CN); HE, Beijing, Shenzhen, Guangdong, 518129 (CN); XIE, Huayong, Shenzhen, Guangdong, 518129 (CN)
(74) Representative: Santarelli

(57) **Abstract**

The gamepad charging dock includes a first main body and a stand. Second rotational connection portions of the stand are rotationally connected to first rotational connection portions of the first main body, so that the stand is rotatable around the first rotational connection portions. In an unfolded state, a support portion of the stand and one end of the first main body abut against a placement surface. Through the inclined support of the stand, the gamepad charging dock can be placed obliquely, thereby reducing the desktop space required for placing the gamepad charging dock.

## Description

### Technical Field

The present disclosure relates to the technical field of gamepad charging and, in particular, to a gamepad charging dock.

### Background of the Invention

Most game consoles on the market are split-type, with a main unit and a gamepad being detachably connected. A user connects the main unit to a TV or a display screen, and then controls a game by means of the gamepad. When connected to the TV or the display screen, the main unit is charged at the same time. However, the gamepad continuously consumes power during use. Under normal circumstances, the gamepad runs out of power faster than the main unit.

To charge gamepads, gamepad charging docks have been developed. The gamepad charging docks are configured to receive and charge the gamepads. A conventional gamepad charging dock allows the gamepad to be placed therein from top to bottom. A charging interface of the gamepad is located at one end of the gamepad in a width direction. When the gamepad is being charged, the charging interface of the gamepad faces the gamepad charging dock, which means that the charging interface of the gamepad faces downward. This causes the length direction of the gamepad to coincide with the transverse direction of the gamepad charging dock, thereby increasing the size of the charging dock in the transverse direction. When the gamepad charging dock is placed on a desktop, it occupies a relatively large space on the desktop, causing inconvenience for placement.

### Summary of the Invention

In view of the defects and deficiencies of the prior art, the purpose of the present disclosure is to provide a gamepad charging dock. Second rotational connection portions of a stand are rotationally connected to first rotational connection portions of a first main body, so that the stand is rotatable around the first rotational connection portions. In an unfolded state, an included angle is formed between the first main body and second main bodies, and a support portion of the stand and one end of the first main body abut against a placement surface. Through the inclined support of the stand, the gamepad charging dock can be placed obliquely, thereby reducing the desktop space required for placing the gamepad charging dock.

To achieve the above purpose, the technical solution adopted by the present disclosure is as follows: A gamepad charging dock includes a first main body and a stand. The first main body includes connection modules and a charging module. Each connection module is configured to be detachably connected to a gamepad. The charging module is configured to be electrically connected to the gamepad so as to charge the gamepad. The first main body is provided with first rotational connection portions. The stand includes second main bodies, a support portion and second rotational connection portions. The support portion and the second rotational connection portions are respectively arranged at two opposite ends of the second main body. The second rotational connection portions are rotationally connected to the first rotational connection portions. In a storage state, the support portion is close to the first main body, the first main body is placed on a placement surface, and the connection modules are located at an end of the first main body that is away from the placement surface. In an unfolded state, the second main bodies are arranged at an included angle with respect to the first main body. When the gamepad charging dock is placed on the placement surface, the support portion and one end of the first main body abut against the placement surface, and the first main body is arranged obliquely relative to the placement surface.

With the above technical solution, the present disclosure achieves the following beneficial effects: The second rotational connection portions of the stand are rotationally connected to the first rotational connection portions of the first main body, so that the stand is rotatable around the first rotational connection portions. During switching from the storage state to the unfolded state, the stand rotates around the first rotational connection portions (that is, the second main bodies and the support portion rotate around the first rotational connection portions), so that the support portion gradually moves away from the first main body. In the unfolded state, the first main body is arranged at an included angle with respect to the second main bodies, and the support portion of the stand and one end of the first main body abut against the placement surface. Through the inclined support of the stand, the gamepad charging dock can be placed obliquely, thereby reducing the desktop space required for placing the gamepad charging dock.

### Brief Description of the Drawings

In order to more clearly illustrate the technical solutions in the embodiments of the present disclosure or the prior art, the following is a brief introduction to the drawings required for the description of the embodiments or the prior art. Obviously, the drawings described below merely illustrate some embodiments of the present disclosure. For those of ordinary skill in the art, other drawings may be obtained on the basis of the following ones without creative labor.
FIG. 1 is a schematic structural view of a gamepad charging dock according to an embodiment of the present disclosure in a storage state.
FIG. 2 is a schematic structural view of the gamepad charging dock according to an embodiment of the present disclosure in an unfolded state.
FIG. 3 is an exploded schematic view of the gamepad charging dock according to an embodiment of the present disclosure in the storage state.
FIG. 4 is a cross-sectional view taken along line A-A' of FIG. 1.
FIG. 5 is a cross-sectional view taken along line B-B' of FIG. 1.
FIG. 6 is a cross-sectional view taken along line C-C' of FIG. 1.
FIG. 7 is a cross-sectional view taken along line D-D' of FIG. 1.
FIG. 8 is a cross-sectional view taken along line E-E' of FIG. 1.
FIG. 9 is a cross-sectional view taken along line F-F' of FIG. 1.
FIG. 10 is a schematic structural view of a first housing according to an embodiment of the present disclosure.

Reference numerals: 1000. gamepad charging dock; 100. first main body; 10. first housing; 11. top plate; 111. first housing limiting portion; 112. first guiding and limiting portion; 113. first engagement portion; 1131. engagement hole; 114. first edge limiting portion; 115. first reinforcing rib; 116. first non-slip limiting portion; 1161. non-slip rib; 118. first support protrusion; 119. connection module; 1191. mounting blind hole; 1192. electrical connection avoidance hole; 1193. first circuit positioning portion; 1194. second circuit positioning portion; 1195. magnetic limiting portion; 1196. circuit limiting portion; 1197. light guide limiting portion; 1198. light guide support rib; 1199. light guide avoidance hole; 20. second housing; 21. bottom plate; 211. second housing limiting portion; 212. first charging avoidance hole; 213. second support protrusion; 214. second reinforcing rib; 215. second guiding and limiting portion; 216. second screw hole; 217. second non-slip limiting portion; 2171. non-slip protrusion; 2172. non-slip avoidance hole; 218. second edge limiting portion; 22. side plate; 221. first rotational connection portion; 2211. connection limiting portion; 22111. first screw hole; 2212. radial limiting groove; 222. first rotation limiting portion; 2221. third limiting surface; 223. second rotation limiting portion; 2231. fourth limiting surface; 224. storage limiting portion; 225. storage groove; 226. second charging avoidance hole; 227. second engagement portion; 30. receiving cavity; 200. stand; 210. second rotational connection portion; 2101. shaft hole; 2102. limiting hole; 2103. first limiting surface; 2104. radial limiting portion; 220. second main body; 2201. second limiting surface; 230. support portion; 2301. storage limiting groove; 240. cover plate; 300. limiting screw; 310. stand limiting portion; 320. insertion portion; 400. non-slip pad; 410. non-slip groove; 510. display unit; 520. light guide unit; 600. magnetic member; 710. circuit board; 711. circuit limiting avoidance hole; 712. magnetic avoidance hole; 713. first circuit positioning avoidance hole; 714. second circuit positioning avoidance hole; 715. guiding and limiting avoidance hole; 720. electrical connector; 730. first charging connector; 740. second charging connector; 800. housing screw; 900. circuit screw; 1010. screw cover pad; X. first clockwise direction; Y. second clockwise direction; G. first preset angle; H. second preset angle; I. third preset angle.

### Detailed Description of Embodiments

The present disclosure is described in further detail below in conjunction with the accompanying drawings.

The present specific embodiment is merely used for explaining the present disclosure rather than limiting the present disclosure. Those skilled in the art may make modifications to this embodiment without creative contribution after reading this specification, but such modifications provided that they fall within the scope of the claims of the present disclosure.

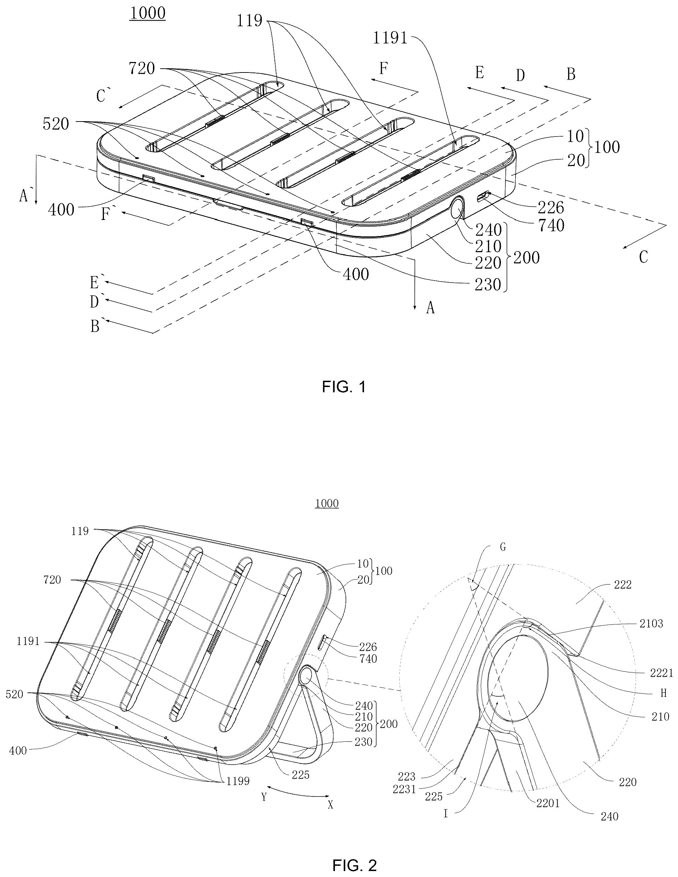

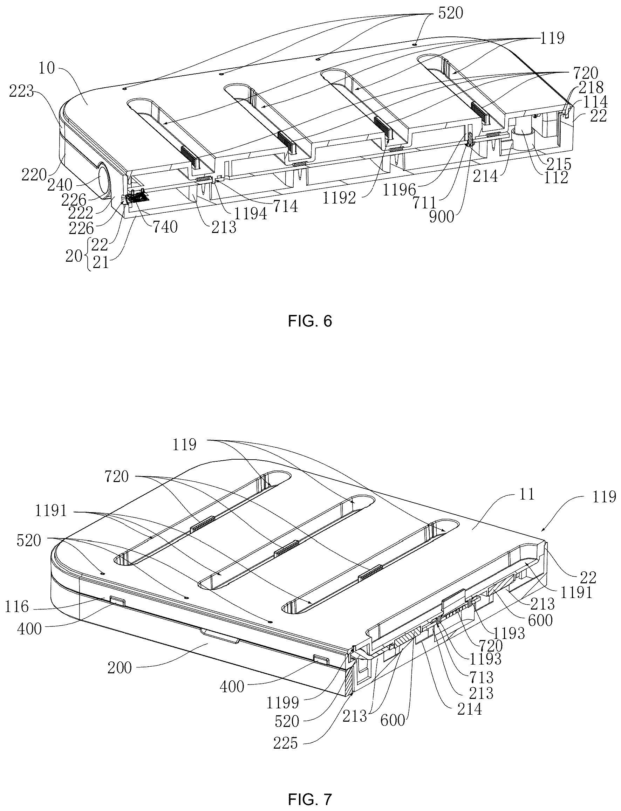

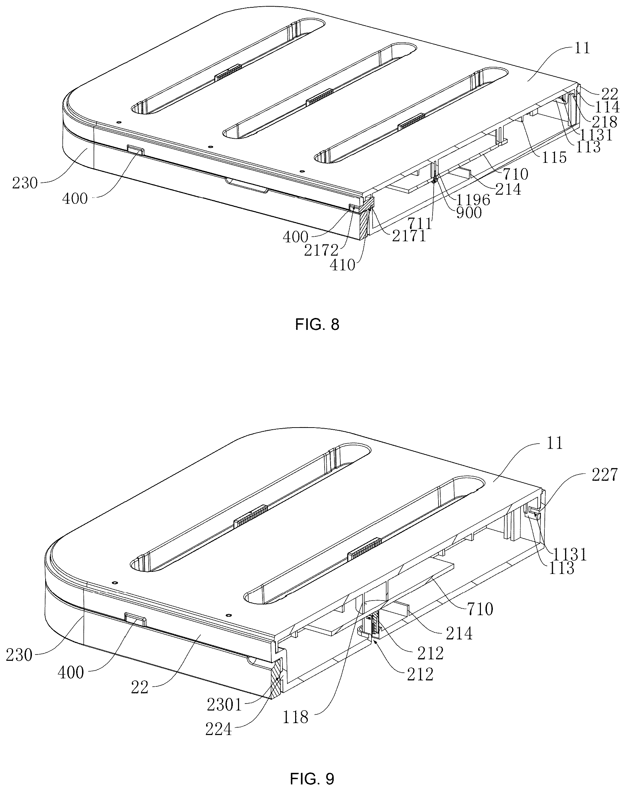

As shown in FIGs. 1-9, this embodiment relates to a gamepad charging dock 1000. The gamepad charging dock 1000 includes a first main body 100 and a stand 200. The first main body 100 includes connection modules 119 and a charging module. Each connection module 119 is configured to be detachably connected to a gamepad, and the charging module is configured to be electrically connected to the gamepad so as to charge the gamepad.

The stand 200 includes second main bodies 220, a support portion 230, and second rotational connection portions 210. The support portion 230 and the second rotational connection portions 210 are respectively arranged at two opposite ends of the second main bodies 220. The first main body 100 is provided with first rotational connection portions 221. The second rotational connection portions 210 are rotationally connected to the first rotational connection portions 221.

In a storage state, the support portion 230 is close to the first main body 100. The first main body 100 is placed on a placement surface, and the connection modules 119 are located at an end of the first main body 100 that is away from the placement surface. In some application scenarios, the placement surface is a desktop.

In an unfolded state, the second main bodies 220 are arranged at an included angle with respect to the first main body 100. When the gamepad charging dock 1000 is placed on the placement surface, the support portion 230 and one end of the first main body 100 abut against the placement surface.

The second rotational connection portions 210 of the stand 200 are rotationally connected to the first rotational connection portions 221 of the first main body 100, so that the stand 200 is rotatable around the first rotational connection portions 221. In the unfolded state, the first main body 100 is arranged at an included angle with respect to the second main bodies 220, and the support portion 230 of the stand 200 and one end of the first main body 100 abut against the placement surface. Due to the inclined support of the stand 200, the gamepad charging dock 1000 can be placed obliquely, thereby reducing the desktop space required for placing the gamepad charging dock.

In this embodiment, the stand 200 has a U-shaped structure. The second rotational connection portions 210 are arranged at two ends of the stand 200. The second rotational connection portions 210 and the support portion 230 are respectively located at two opposite ends of the second main bodies 220. In other words, the second main bodies 220 are connected between the second rotational connection portions 210 and the support portion 230.

In an implementation mode, a radial limiting portion 2104 is provided on a side of each second rotational connection portion 210 that is close to the first main body 100, and extends toward the first main body 100. The second rotational connection portion 210 and the radial limiting portion 2104 jointly define a through hole, which is a stepped hole composed of a shaft hole 2101 and a limiting hole 2102 having different diameters. The diameter of the shaft hole 2101 is smaller than that of the limiting hole 2102, and the shaft hole 2101 is close to the first main body 100. A connection limiting portion 2211 is provided on a side of each first rotational connection portion 221 that is close to the stand 200, and extends toward the stand 200. The first rotational connection portion 221 and the connection limiting portion 2211 jointly define a first screw hole 22111, and the first screw hole 22111 is configured to allow a portion of a limiting screw 300 of the stand 200 to be fitted therein. A radial limiting groove 2212 is provided on an outer side of the connection limiting portion 2211 and is configured to allow the radial limiting portion 2104 to be fitted therein. Each limiting screw 300 of the stand 200 includes an insertion portion 320 and a stand limiting portion 310. A cover plate 240 is provided to cover an outer side of the limiting hole 2102, so as to block the limiting screw 300 of the stand 200 and make an outer edge smoother.

When the stand 200 and the first main body 100 are assembled together, the connection limiting portions 2211 are fitted in the shaft holes 2101, and the radial limiting portions 2104 are fitted in the radial limiting grooves 2212. Outer peripheral surfaces of the connection limiting portions 2211 and the radial limiting portions 2104 are both cylindrical surfaces. The connection limiting portions 2211 and the radial limiting portions 2104 function as rotating shafts and shaft sleeves, so that the stand 200 is rotatable around a central axis of the connection limiting portions 2211 and the radial limiting portions 2104. When the insertion portion 320 of each limiting screw 300 is inserted into the corresponding first screw hole 22111, the stand limiting portion 310 is located in the limiting hole 2102. The stand limiting portion 310 at least partially extends toward a hole wall of the limiting hole 2102, and is spaced apart from a stepped surface formed by the shaft hole 2101 and the limiting hole 2102, or abuts against the stepped surface formed by the shaft hole 2101 and the limiting hole 2102, thereby preventing the connection limiting portion 2211 from disengaging from the radial limiting portion 2104, i.e., preventing the second rotational connection portion 210 from disengaging from the first rotational connection portion 221.

In other embodiments, the stand 200 has a plate-shaped structure or a rod-shaped structure. A second rotational connection portion 210 is provided at an end of the stand 200 that is connected to the first main body 100. The second rotational connection portion 210 and the support portion 230 of the stand 200 are respectively located at two opposite ends of the second main body 220. In other words, the second main body 220 is connected between the second rotational connection portion 210 and the support portion 230.

In other embodiments, the second rotational connection portion 210 of the stand 200 is hinged to the first rotational connection portion 221 of the first main body 100 by means of a rotating shaft. The rotating shaft is a damping rotating shaft, or a damping sleeve is sleeved on an outer side of the rotating shaft, so as to ensure that the posture of the stand 200 remains unchanged in the unfolded state.

As shown in FIGS. 1-5 and FIGS. 7-9, the first main body 100 is provided with a storage groove 225. In the storage state, the stand 200 is fitted in the storage groove 225, so that the outer surface of the stand 200 is flush with the outer surface of the first main body 100. With the above configurations, when the gamepad charging dock 1000 is not used, the stand 200 is completely received within the first main body 100. In this case, the entire gamepad charging dock 1000 becomes an integral plate-shaped body, which is easy to carry and store by users.

In this embodiment, the stand 200 is U-shaped, the first rotational connection portions are located on two opposite sides of the first main body 100, and the storage groove 225 is arranged along an edge of the first main body 100, so that the stand 200 can be received along the edge of the first main body 100. With the above configurations, the first main body 100 is more compact in structure, and the storage groove 225 does not occupy the internal space of the first main body 100, so that other components such as a circuit board 710 can be better mounted in the first main body 100.

In other embodiments, the stand 200 has a plate-shaped structure or a rod-shaped structure, and the storage groove 225 is located on a side of the first main body 100 that is close to the placement surface.

In an implementation mode, a groove wall of the storage groove 225 that is close to the support portion 230 is provided with a storage limiting portion 224. The storage limiting portion 224 extends at least partially along a length direction of the stand 200. A side, close to the storage limiting portion 224, of the support portion 230 is provided with a storage limiting groove 2301. In the storage state, the storage limiting portion 224 is fitted in the storage limiting groove 2301, so as to limit the rotation of the stand 200 in a direction away from the storage limiting portion 224. When the gamepad charging dock 1000 is not used, the stand 200 will not naturally disengage from the storage groove 225, thereby making the gamepad charging dock 1000 easy to carry or store by users.

In an implementation mode, the length direction of the stand 200 is perpendicular to a rotation direction of the stand 200 when the stand 200 is switched from the storage state to the unfolded state, thereby limiting the stand 200 from switching from the storage state to the unfolded state.

In this embodiment, the storage limiting portion 224 extends in the length direction of the stand 200. In the storage state, the storage limiting portion 224 is fitted in the storage limiting groove 2301, so as to limit the rotation of the stand 200 in a direction away from the storage limiting portion 224.

In other embodiments, the storage limiting portion 224 extends at least partially in the length direction of the stand 200 and at least partially toward the stand 200. In the storage state, the storage limiting portion 224 is fitted in the storage limiting groove 2301, so as to limit the rotation of the stand 200 in a direction away from the storage limiting portion 224.

As shown in FIGS. 1-4, the first main body 100 is provided with first rotation limiting portions 222 and second rotation limiting portions 223. Each first rotation limiting portion 222 is located on a side of the corresponding second rotational connection portion 210 which is away from the support portion 230. The rotation direction of the stand 200 during switching from the storage state to the unfolded state is designated as a first clockwise direction X. In the unfolded state, the first rotation limiting portions 222 abut against the second rotational connection portions 210, so as to limit rotation of the stand 200 in the first clockwise direction X. In the unfolded state, the center of gravity of the gamepad charging dock 1000 is projected onto the placement surface, and the projection of the center of gravity of the gamepad charging dock 1000 is located between the end of the first main body 100 that abuts against the placement surface and the support portion 230. The stand 200 and the end of the first main body 100 that abuts against the placement surface provide a force opposite to the direction of gravity, so as to support the first main body 100 to be placed obliquely. The first rotation limiting portions 222 abut against the second rotational connection portions 210, so as to ensure that postures of the stand 200 and the first main body 100 remain unchanged in the unfolded state.

The second rotation limiting portion 223 is located on a side of each second main body 220 and/or the support portion 230 in a thickness direction of the stand 200, and the second rotation limiting portions 223 are close to the end of the first main body 100 that is away from the placement surface. The rotation direction of the stand 200 during switching from the unfolded state to the storage state is designated as a second clockwise direction Y. In the storage state, the second rotation limiting portions 223 abut against the second main bodies 220 and/or the support portion 230, so as to limit rotation of the stand 200 in the second clockwise direction Y.

In an implementation mode, in the unfolded state, a surface of each second rotational connection portion 210 that abuts against the corresponding first rotation limiting portion 222 is a first limiting surface 2103. A surface of each first rotation limiting portion 222 that abuts against the corresponding second rotational connection portion 210 is a third limiting surface 2221. In the storage state, a surface of each second main body 220 and/or a surface of the support portion 230, that abut(s) against the corresponding second rotation limiting portion 223, are/is a second limiting surface 2201. A surface of each second rotation limiting portion 223 that abuts against the corresponding second main body 220 and/or the support portion 230 is a fourth limiting surface 2231.

The first limiting surface 2103 and the second limiting surface 2201 are arranged at a first preset angle G. The third limiting surface 2221 and the fourth limiting surface 2231 are arranged at a second preset angle H. In the unfolded state, an included angle between the second limiting surface 2201 and the fourth limiting surface 2231 is a third preset angle I. The third preset angle I is equal to a difference between the second preset angle H and the first preset angle G.

The first limiting surface 2103, the second limiting surface 2201, the third limiting surface 2221 and the fourth limiting surface 2231 are all flat surfaces. With the above configurations, abutment limiting can be better achieved.

In an implementation mode, the unfolding angle of the stand 200 may be changed by changing the value of the third preset angle I. The first preset angle G (i.e., the included angle between the first limiting surface 2103 and the second limiting surface 2201) may be changed by changing a connection angle between the second main body 220 and the second rotational connection portion 210. With the second preset angle H unchanged, the third preset angle I may be changed by changing the first preset angle G, thereby changing the unfolding angle of the stand 200. The second preset angle H (i.e., the included angle between the third limiting surface 2221 and the fourth limiting surface 2231) may also be changed by changing an included angle between the first rotation limiting portion 222 and the second rotation limiting portion 223. With the first preset angle G unchanged, the third preset angle I is changed by changing the second preset angle H, thereby changing the unfolding angle of the stand 200.

As shown in FIGS. 1-3, 5 and 7-9, in the unfolded state, non-slip pads 400 are provided at the end of the first main body 100 that abuts against the placement surface. When the gamepad charging dock 1000 is placed on the placement surface, the non-slip pads 400 abut against the placement surface.

Each non-slip pad 400 is provided with a non-slip groove 410. The first main body 100 includes a first housing 10 and a second housing 20. The second housing 20 is close to the placement surface, and the non-slip pads 400 are clamped between the first housing 10 and the second housing 20. The second housing 20 is provided with second non-slip limiting portions 217. Each second non-slip limiting portion 217 is provided with a non-slip protrusion 2171, which extends toward the non-slip pad 400 and is fitted in the non-slip groove 410. Each second non-slip limiting portion 217 is provided with a non-slip avoidance hole 2172, which is configured to allow the non-slip pad 400 to be at least partially fitted therein so as to expose the non-slip pad 400, so that the non-slip pad 400 abuts against the placement surface in the unfolded state.

The non-slip avoidance holes 2172 communicate with the storage groove 225. When the first main body 100 needs to be placed obliquely, the non-slip pads 400 come into contact with the placement surface immediately. With such configurations, when the user unfolds and uses the gamepad charging dock, the non-slip pads 400 exert an anti-slip effect immediately, ensuring that the gamepad charging dock will not slip when unfolded for use, and making the whole structure more stable. The first housing 10 is provided with first non-slip limiting portions 116, which extend at least partially toward the second housing 20. The non-slip pads 400 are clamped between the first non-slip limiting portions 116 and the second non-slip limiting portions 217.

In an implementation mode, each first non-slip limiting portion 116 includes a plurality of non-slip ribs 1161 extending toward the second housing 20. Each non-slip pad 400 is made of a deformable material. When the non-slip pad 400 is clamped between the first non-slip limiting portion 116 and the second non-slip limiting portion 217, the non-slip protrusion 2171 is fitted in the non-slip groove 410, and the other side of the non-slip pad 400 abuts against the non-slip ribs 1161. The non-slip pad 400 deforms to allow the non-slip ribs 1161 to be fitted therein, further improving the connection stability of the non-slip pad 400, the first housing 10 and the second housing 20.

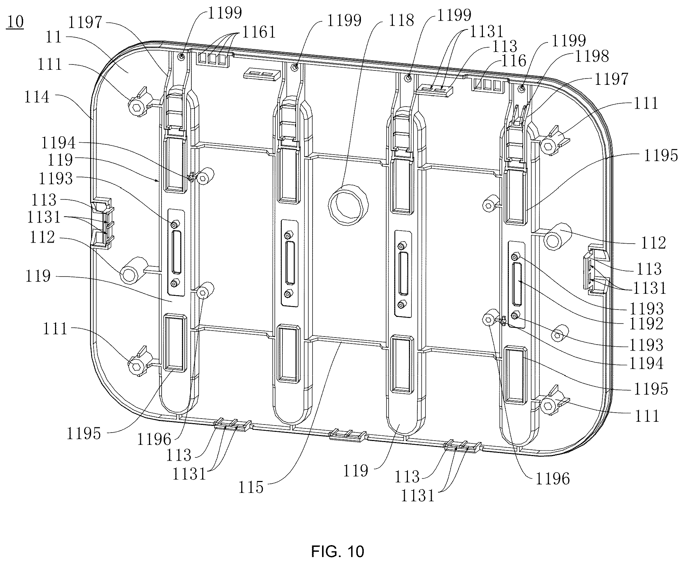

As shown in FIGS. 1-3 and 5-10, the gamepad charging dock 1000 further includes a display module. The display module includes display units 510 and light guide units 520. The display units 510 are arranged in the first main body 100. The light guide units 520 are at least partially arranged in the first main body 100. The first main body 100 is provided with light guide avoidance holes 1199. Light emitted by the display units 510 is transmitted through the light guide units 520 to exit from the light guide avoidance holes 1199.

In this embodiment, the display units 510 are configured as LED lamps, and the display units 510 are arranged on the circuit board 710. The light guide units 520 are arranged close to the display units 510. The first main body 100 is provided with the light guide avoidance holes 1199, and the light guide units 520 are at least partially fitted in the light guide avoidance holes 1199, so that light emitted by the display units 510 is transmitted through the light guide units 520 and exits from the light guide avoidance holes 1199.

As shown in FIGS. 1-4, the charging module includes a first charging connector 730, a second charging connector 740, the circuit board 710, and electrical connectors 720. The first charging connector 730 and the second charging connector 740 are both electrically connected to an external power supply. The first charging connector 730 and the second charging connector 740 are both electrically connected to the circuit board 710. The electrical connectors 720 are electrically connected to the circuit board 710 to charge the gamepad.

The first charging connector 730 is arranged at an end of the first main body 100 that is close to the placement surface in the storage state. The first charging connector 730 is configured to be electrically connected to the external power supply in the unfolded state, so that a charging cable is blocked by the first main body 100 when the gamepad charging dock 1000 is being charged, and the lateral size during charging is reduced, thereby reducing a space required for charging the gamepad charging dock 1000. The second charging connector 740 is arranged at an exposed portion of the first main body 100 in the storage state. The second charging connector 740 is configured to be electrically connected to the external power supply in the unfolded state or the storage state. The configuration of the second charging connector 740 facilitates charging of the gamepad charging dock 1000 in the storage state.

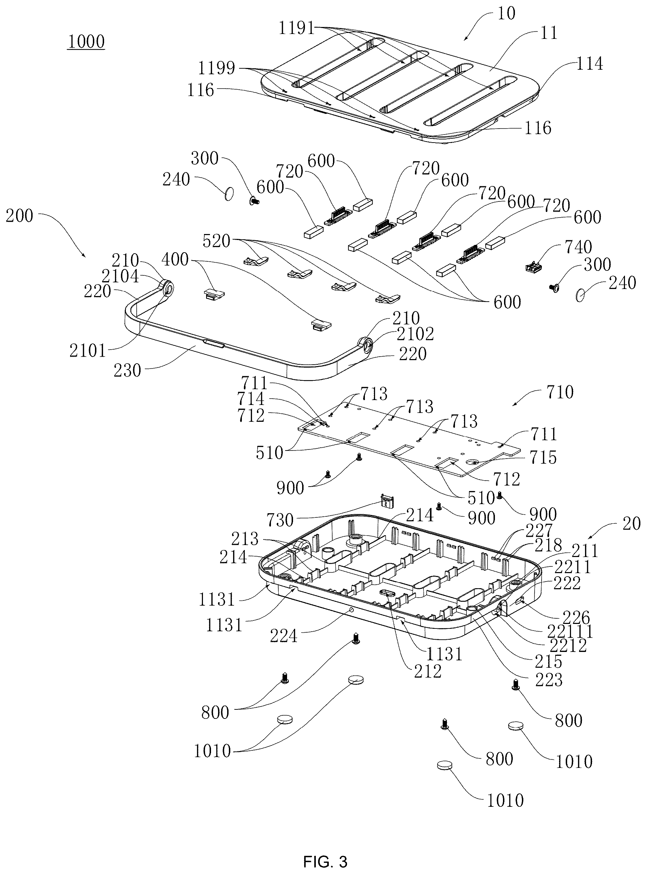

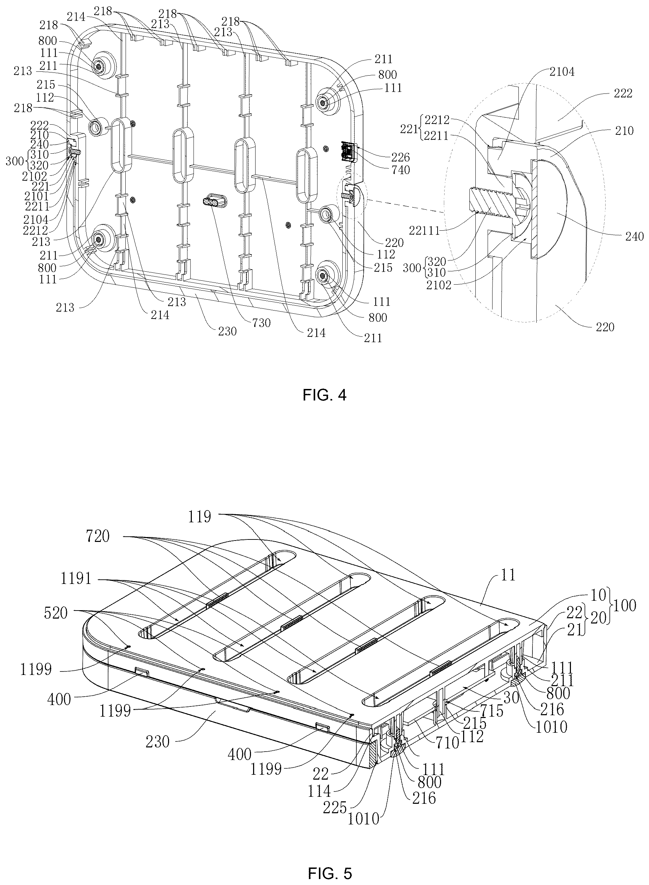

As shown in FIGS. 3 and 5, magnetic members 600 are arranged in each connection module 119. Magnetic mating members are arranged in the gamepad. The magnetic members 600 are configured to attract the magnetic mating members, so that the first main body 100 is magnetically connected to the gamepad.

In this embodiment, the magnetic members 600 are magnets, and the magnetic mating members are made of a material that can be attracted by the magnets, such as metal. The magnetic mating member is a metal sheet. In other embodiments, the magnetic mating member is a metal block.

As shown in FIGS. 1-3 and 5-9, a mounting blind hole 1191 is provided on a side of each connection module 119 that is away from the placement surface. The mounting blind hole 1191 is configured to allow the gamepad to be at least partially fitted therein, so that the first main body 100 is detachably connected to the gamepad.

As shown in FIGS. 1-10, the first main body 100 includes a first housing 10 and a second housing 20. The first housing 10 and the second housing 20 jointly form a receiving cavity 30. The first housing 10 is provided with first housing limiting portions 111 extending toward the second housing 20. The second housing 20 is provided with second housing limiting portions 211 extending toward the first housing 10. Each second housing limiting portion 211 is provided with a hole for a first housing limiting portion 111 and a housing screw 800 to be fitted therein. Each second housing limiting portion 211 is provided with a second screw hole 216 for the housing screw 800 to be fitted therein. The housing screws 800 pass through the second housing limiting portions 211 and are fitted in the first housing limiting portions 111, so that the first housing 10 and the second housing 20 are fixedly connected. A side of each second housing limiting portion 211 that is away from the first housing 10 is covered with a screw cover pad 1010, and each second screw hole 216 is sealed by a corresponding screw cover pad 1010. In the storage state, the screw cover pads 1010 abut against the placement surface, and also increase a friction force between the gamepad charging dock 1000 and the placement surface. The screw cover pads 1010 may be made of a rubber material with a relatively large friction coefficient, thereby increasing the friction force between the gamepad charging dock 1000 and the placement surface.

The first housing 10 includes a top plate 11. A first edge limiting portion 114 is provided along an edge of the top plate 11 and extends toward the second housing 20. The second housing 20 includes a bottom plate 21 and a side plate 22. The side plate 22 is arranged along an edge of the bottom plate 21, and extends toward the first housing 10. The bottom plate 21 is provided with second edge limiting portions 218 extending toward the first housing 10. The second edge limiting portions 218 are at least partially spaced apart from the side plate 22. When the first housing 10 and the second housing 20 are assembled, the first edge limiting portion 114 is fitted in a spacing space formed between the second edge limiting portions 218 and the side plate 22, thereby fixing the edges of the first housing 10 and the second housing 20 and preventing gaps at the connection position.

**In** an implementation mode, the top end of each second edge limiting portion 218 is spaced apart from the side plate 22. When the first housing 10 and the second housing 20 are assembled, the first edge limiting portion 114 is fitted in the spacing space formed between the top ends of the second edge limiting portions 218 and the side plate 22, thereby fixing the edges of the first housing 10 and the second housing 20 and preventing gaps at the connection position.

First engagement portions 113 are provided on a side of the top plate 11 that faces the second housing 20 and extend toward the second housing 20. Second engagement portions 227 are provided on a side of the side plate 22 that faces the receiving cavity 30. The first engagement portions 113 and the second engagement portions 227 are in snap-fit connection, so that the first housing 10 and the second housing 20 are in snap-fit connection.

**In** this embodiment, each first engagement portion 113 is provided with an engagement hole 1131, and each second engagement portion 227 is provided with a fastener. The fasteners are fitted in the engagement holes 1131, so that the first housing 10 and the second housing 20 are in snap-fit connection.

**In** an implementation mode, the fastener of each second engagement portion 227 is located between every two adjacent second edge limiting portions 218. When the first edge limiting portion 114 is fitted in the spacing space formed between the second edge limiting portions 218 and the side plate 22, the fasteners are fitted in the engagement holes 1131, so as to improve the stability of the snap-fit connection between the first housing 10 and the second housing 20.

First guiding and limiting portions 112 are provided on the side of the top plate 11 that faces the second housing 20 and extend toward the second housing 20. Second guiding and limiting portions 215 are provided on a side of the bottom plate 21 that faces the first housing 10 and extend toward the first housing 10. Each second guiding and limiting portion 215 is provided with a hole for a first guiding and limiting portion 112 to be fitted therein. During the process of mounting the first housing 10 on the second housing 20, a distance between the second guiding and limiting portions 215 and the first guiding and limiting portions 112 is smaller than a distance between the first engagement portions 113 and the second engagement portions 227, so that the first guiding and limiting portions 112 are fitted in the second guiding and limiting portions 215 before the engagement of the first engagement portions 113 and the second engagement portions 227, preventing mutual offset between the first housing 10 and the second housing 20 during snap-fit connection, and facilitating the mounting of the first housing 10 on the second housing 20.

In this embodiment, the first housing 10 is provided with four connection modules 119. Each connection module 119 is provided with magnetic members 600, and magnetic mating members are arranged in the gamepad. The magnetic members 600 magnetically attract the magnetic mating members, so that the gamepad is detachably connected to the gamepad charging dock 1000. Each connection module 119 is provided with a mounting blind hole 1191 for a portion of the gamepad to be fitted therein, thereby further improving the stability of the connection between the gamepad and the gamepad charging dock 1000.

First reinforcing ribs 115 are provided on a side of the first housing 10 that faces the second housing 20, and each first reinforcing rib 115 is arranged between every two adjacent connection modules 119, so as to ensure the mechanical strength of the first housing 10.

Magnetic limiting portions 1195 are provided on a side of each connection module 119 that faces the receiving cavity 30. Each magnetic limiting portion 1195 is arranged along the edge of a magnetic member 600, and extends toward the receiving cavity 30. Each magnetic member 600 is bonded to the top plate 11, specifically in the magnetic limiting portion 1195, so as to realize the positioning and mounting of the magnetic member 600, and prevent offset of the magnetic member 600, which may cause a failure of magnetic connection with the gamepad. Second support protrusions 213 are provided on the side of the bottom plate 21 that faces the first housing 10. The magnetic members 600 are sandwiched between the second support protrusions 213 and the top plate 11, and the second support protrusions 213 cooperate with the magnetic limiting portions 1195 to realize the positioning and mounting of the magnetic members 600.

A circuit board 710 is received in the receiving cavity 30. Electrical connectors 720 are arranged on a side of the circuit board 710 that faces the top plate 11. Each connection module 119 is provided with an electrical connection avoidance hole 1192. Each electrical connector 720 is a male connector, and the gamepad is provided with a female connector. The electrical connection avoidance hole 1192 is configured to allow at least a portion of the electrical connector 720 to pass therethrough, so that the male connector is fitted in the female connector. When a gamepad is fitted in a mounting blind hole 1191, the portion of the electrical connector 720 is fitted in the gamepad.

Both the first charging connector 730 and the second charging connector 740 are electrically connected to the circuit board 710, and the circuit board 710 is electrically connected to each electrical connector 720. During use, the first charging connector 730 or the second charging connector 740 is electrically connected to an external power supply, thereby charging the gamepad through the circuit board 710 and the electrical connector 720.

The circuit board 710 is provided with magnetic avoidance holes 712 for avoiding the magnetic members 600 and the magnetic limiting portions 1195.

The circuit board 710 is provided with circuit limiting avoidance holes 711. Circuit limiting portions 1196 are provided on the side of the top plate 11 that faces the second housing 20, and extend toward the second housing 20. Each circuit limiting portion 1196 is provided with a hole for a circuit screw 900 to be fitted therein, and the circuit limiting avoidance holes 711 are configured to avoid the circuit screws 900. The circuit screws 900 pass through the circuit limiting avoidance holes 711 and are fitted in the circuit limiting portions 1196, thereby fixedly connecting the circuit board 710 to the first housing 10. A first support protrusion 118 is provided on the side of the top plate 11 that faces the second housing 20, and extends toward the second housing 20. When the circuit board 710 is mounted to the first housing 10, the first support protrusion 118 abuts against the circuit board 710, and cooperates with the circuit screws 900 and the circuit limiting portions 1196 to realize positioning and mounting of the circuit board 710.

First circuit positioning portions 1193 are provided on the side of the top plate 11 that faces the second housing 20, and extend toward the second housing 20. Each electrical connector 720 is provided with positioning holes for the first circuit positioning portions 1193 to be fitted therein. The circuit board 710 is provided with first circuit positioning avoidance holes 713. The first circuit positioning portions 1193 are fitted in the positioning holes and the first circuit positioning avoidance holes 713, thereby fixing the electrical connectors 720 and the circuit board 710.

Second circuit positioning portions 1194 are provided on the side of the top plate 11 that faces the second housing 20, and extend toward the second housing 20. The circuit board 710 is provided with second circuit positioning avoidance holes 714. The second circuit positioning avoidance holes 714 are configured for the second circuit positioning portions 1194 to be fitted therein, thereby facilitating positioning and mounting of the circuit board 710 to the first housing 10.

The circuit board 710 is provided with guiding and limiting avoidance holes 715 for allowing the first guiding and limiting portions 112 or the second guiding and limiting portions 215 to pass therethrough, so that the first guiding and limiting portions 112 are fitted in the second guiding and limiting portions 215.

Light guide limiting portions 1197 and light guide support ribs 1198 are provided on the side of the top plate 11 that faces the second housing 20. Each light guide limiting portion 1197 is arranged along the edge of a light guide unit 520, and extends toward the second housing 20, thereby facilitating positioning and mounting of the light guide unit 520. Each light guide support rib 1198 is arranged in the middle of a light guide limiting portion 1197, extends toward the second housing 20, and is configured to abut against one side of the light guide unit 520. Second support protrusions 213 are provided on the side of the bottom plate 21 that faces the first housing 10. The light guide units 520 are clamped between the light guide support ribs 1198 and the second support protrusions 213, and cooperate with the light guide limiting portions 1197 to realize limiting and mounting of the light guide units 520.

The second support protrusions 213 also abut against the side of the circuit board 710 that is away from the electrical connectors 720, so as to support the electrical connectors 720, thereby ensuring the mechanical strength required for supporting the gamepad.

Second reinforcing ribs 214 are provided on the side of the bottom plate 21 that faces the first housing 10. Each second reinforcing rib 214 is arranged between every two adjacent second support protrusions 213, thereby enhancing the mechanical strength of the second housing 20 and ensuring the mechanical strength of the second support protrusions 213.

In this embodiment, the first rotational connection portions 221, the first rotation limiting portions 222, and the second rotation limiting portions 223 are all arranged on the side plate 22. The storage groove 225 is provided on the side plate 22, so that a lower surface of the stand 200 is flush with the bottom plate 21, and a front surface of the stand 200 is flush with an outer surface of the side plate 22. A second charging avoidance hole 226 is formed in the side plate 22 to expose the second charging connector 740, thereby facilitating connection of the second charging connector 740 to the external power supply. A first charging avoidance hole 212 is formed in the bottom plate 21 to expose the first charging connector 730, thereby facilitating connection of the first charging connector 730 to the external power supply. The second charging connector 740 is configured to connect the gamepad charging dock 1000 to the external power supply in a folded state or an unfolded state. The first charging connector 730 is configured to connect the gamepad charging dock 1000 to the external power supply in the unfolded state.

The foregoing descriptions are merely used for illustrating the technical solutions of the present disclosure rather than limiting the technical solutions of the present disclosure. Any other modifications or equivalent replacements made by those of ordinary skill in the art to the technical solutions of the present disclosure, without departing from the spirit and scope of the technical solutions of the present disclosure, shall all fall within the scope of the claims of the present disclosure.

## Claims

1. A gamepad charging dock, comprising a first main body and a stand, wherein the first main body comprises connection modules and a charging module; each said connection module is configured to be detachably connected to a gamepad; the charging module is configured to be electrically connected to the gamepad so as to charge the gamepad; the first main body is provided with first rotational connection portions; the stand comprises second main bodies, a support portion and second rotational connection portions; the support portion and the second rotational connection portions are respectively arranged at two opposite ends of the second main bodies; the second rotational connection portions are rotationally connected to the first rotational connection portions;
in a storage state, the support portion is close to the first main body, the first main body is placed on a placement surface, and the connection modules are located at an end of the first main body that is away from the placement surface;
in an unfolded state, the second main bodies are arranged at an included angle with respect to the first main body; when the gamepad charging dock is placed on the placement surface, the support portion and an end of the first main body abut against the placement surface, and the first main body is arranged obliquely relative to the placement surface.

2. The gamepad charging dock according to claim 1, wherein the first main body is provided with a storage groove, and in the storage state, the stand is fitted in the storage groove, so that an outer surface of the stand is flush with an outer surface of the first main body.

3. The gamepad charging dock according to claim 2, wherein a groove wall of the storage groove that is close to the support portion is provided with a storage limiting portion, the storage limiting portion extends at least partially along a length direction of the stand, and a side of the support portion that is close to the storage limiting portion is provided with a storage limiting groove; in the storage state, the storage limiting portion is fitted in the storage limiting groove to limit rotation of the stand in a direction away from the storage limiting portion.

4. The gamepad charging dock according to claim 1, wherein the first main body is provided with first rotation limiting portions and second rotation limiting portions; each said first rotation limiting portion is located on a side of the corresponding second rotational connection portion that is away from the support portion, a rotation direction of the stand during switching from the storage state to the unfolded state is designated as a first clockwise direction, and in the unfolded state, the first rotation limiting portion abuts against the second rotational connection portion to limit rotation of the stand in the first clockwise direction;
each said second rotation limiting portion is located on a side of the corresponding second main body and/or the support portion in a thickness direction of the stand, and the second rotation limiting portions are close to the end of the first main body that is away from the placement surface, a rotation direction of the stand during switching from the unfolded state to the storage state is designated as a second clockwise direction, and in the storage state, the second rotation limiting portions abut against the second main bodies and/or the support portion to limit rotation of the stand in the second clockwise direction.

5. The gamepad charging dock according to claim 4, wherein in the unfolded state, a surface of each said second rotational connection portion that abuts against the first rotation limiting portion is a first limiting surface, and a surface of each said first rotation limiting portion that abuts against the second rotational connection portion is a third limiting surface;
in the storage state, a surface of each said second main body and/or the support portion that abuts against the second rotation limiting portion is a second limiting surface, and a surface of each said second rotation limiting portion that abuts against the corresponding second main body and/or the support portion is a fourth limiting surface;
the first limiting surface and the second limiting surface are arranged at a first preset angle, and the third limiting surface and the fourth limiting surface are arranged at a second preset angle; in the unfolded state, an included angle between the second limiting surface and the fourth limiting surface is a third preset angle, which is equal to a difference between the second preset angle and the first preset angle.

6. The gamepad charging dock according to claim 1, wherein in the unfolded state, the end of the first main body that abuts against the placement surface is provided with non-slip pads, and when the gamepad charging dock is placed on the placement surface, the non-slip pads abut against the placement surface.

7. The gamepad charging dock according to claim 1, further comprising a display module, wherein the display module comprises display units and light guide units, the display units are arranged in the first main body, the light guide units are at least partially arranged in the first main body, the first main body is provided with light guide avoidance holes, and light emitted by the display units is transmitted through the light guide units to exit from the light guide avoidance holes.

8. The gamepad charging dock according to claim 1, wherein the charging module comprises a first charging connector, a second charging connector, a circuit board and electrical connectors, the first charging connector and the second charging connector are both electrically connected to an external power supply, the first charging connector and the second charging connector are both electrically connected to the circuit board, and the electrical connectors are electrically connected to the circuit board to charge the gamepad;
wherein the first charging connector is arranged at an end of the first main body in the storage state that is close to the placement surface, the first charging connector is configured to be electrically connected to the external power supply in the unfolded state, the second charging connector is arranged at an exposed portion of the first main body in the storage state, and the second charging connector is configured to be electrically connected to the external power supply in the unfolded state or the storage state.

9. The gamepad charging dock according to claim 1, wherein magnetic members are arranged in each said connection module, magnetic mating members are arranged in the gamepad, and the magnetic members are configured to attract the magnetic mating members, so that the first main body is magnetically connected to the gamepad.

10. The gamepad charging dock according to claim 1, wherein a mounting blind hole is provided on a side of each said connection module that is away from the placement surface and is configured to allow at least a portion of the gamepad to be fitted therein, so that the first main body is detachably connected to the gamepad.

11. The gamepad charging dock according to claim 1, wherein each said second rotational connection portion is hinged to the corresponding first rotational connection portion by means of a rotating shaft, the rotating shaft is a damping rotating shaft, or a damping sleeve is sleeved on an outer side of the rotating shaft.

12. The gamepad charging dock according to claim 1, wherein the first main body comprises a first housing and a second housing, and a receiving cavity is formed between the first housing and the second housing; the first housing is provided with first housing limiting portions extending toward the second housing, and the second housing is provided with second housing limiting portions extending toward the first housing; each said second housing limiting portion is provided with a hole for the first housing limiting portion and a housing screw to be fitted therein; each said second housing limiting portion is provided with a second screw hole for the housing screw to be fitted therein; the housing screws pass through the second housing limiting portions and the first housing limiting portions to fixedly connect the first housing and the second housing; a screw cover pad covers a side of each said second housing limiting portion that is away from the first housing, and the second screw holes are sealed by the screw cover pads; in the storage state, the screw cover pads abut against the placement surface to increase a friction force between the gamepad charging dock and the placement surface.

13. The gamepad charging dock according to claim 12, wherein the first housing comprises a top plate and a first edge limiting portion arranged on an edge of the top plate and extending toward the second housing; the second housing comprises a bottom plate and a side plate arranged along an edge of the bottom plate, the side plate extends toward the first housing, the bottom plate is provided with second edge limiting portions extending toward the first housing, each said second edge limiting portion is at least partially spaced apart from the side plate, and the first edge limiting portion is fitted in a spacing space formed between the second edge limiting portions and the side plate.

14. The gamepad charging dock according to claim 13, wherein first engagement portions extending toward the second housing are provided on a side of the top plate that faces the second housing; second engagement portions are provided on a side of the side plate that faces the receiving cavity; the first engagement portions and the second engagement portions are in snap-fit connection, so that the first housing and the second housing are in snap-fit connection; each said first engagement portion is provided with an engagement hole, and each said second engagement portion is provided with a fastener fitted in the engagement hole; each said fastener is located between every two adjacent second edge limiting portions, and when the first edge limiting portion is fitted in a spacing space formed between the top ends of the second edge limiting portions and the side plate, the fasteners are fitted in the engagement holes.

15. The gamepad charging dock according to claim 14, wherein first guiding and limiting portions extending toward the second housing are provided on the side of the top plate that faces the second housing; second guiding and limiting portions extending toward the first housing are provided on a side of the bottom plate that faces the first housing; each said second guiding and limiting portion is provided with a hole for the first guiding and limiting portion to be fitted therein; when the first housing is mounted on the second housing, a distance between the second guiding and limiting portions and the first guiding and limiting portions is smaller than a distance between the first engagement portions and the second engagement portions, so that the first guiding and limiting portions and the second guiding and limiting portions are engaged before the engagement of the first engagement portions and the second engagement portions when the first housing and the second housing are connected.
